# EUROPEAN PATENT APPLICATION

(11) **EP 3 943 227 A1**
(43) Date of publication of application: **26.01.2022**
(21) Application number: 20772787.6
(22) Date of filing: 18.03.2020
(51) Int. Cl.: B23B 51/00, B23B 51/02

(54) **INDEXABLE DRILL, CUTTING INSERT AND DRILL MAIN BODY**

(30) Priority: 18.03.2019 JP 2019050081; 18.02.2020 JP 2020025571
(71) Applicant: Mitsubishi Materials Corporation, Tokyo 100-8117 (JP)
(72) Inventor: USUI Masahiro, Tokyo 100-8117 (JP)
(74) Representative: Hoffmann Eitle
(86) International application number: PCT/JP2020/011874
(87) International publication number: WO 2020/189698

(57) **Abstract**

In an indexable drill, a cutting insert (10) having a cutting edge (14) is detachably mounted on an insert mounting seat (6) of a drill main body (1). The insert mounting seat (6) has a bottom surface (6a) facing a tip side of a drill main body (1), and a wall surface (6b) extending to the tip side and facing a drill rotation direction (T). The cutting insert (10) has a seating surface (15) seated on the bottom surface (6a) toward a rear end side of the drill main body (1), a contact surface (16) coming into contact with the wall surface (6b) toward a side opposite to the drill rotation direction (T), a projection portion (17) projecting to the side opposite to the drill rotation direction (T) on a tip side of the contact surface (16), and a mounting hole penetrating the seating surface (15) from a tip flank (12).

## Description

### TECHNICAL FIELD

The present invention relates to an indexable drill in which an insert mounting seat is formed in a tip portion of a drill main body rotating around an axis, and a cutting insert is detachably mounted on the insert mounting seat, a cutting insert detachably mounted on the insert mounting seat of the indexable drill, and a drill main body of the indexable drill.

Priority is claimed on Japanese Patent Application No. 2019-50081, filed on March 18, 2019 and Japanese Patent Application No. 2020-25571, filed on February 18, 2020, the contents of which are incorporated herein by reference.

### BACKGROUND ART

For example, in an indexable drill disclosed in Patent Document 1, an insert mounting seat of a drill main body has a split surface extending perpendicular to an axis and a torque transmitting surface adjacent to the split surface. A cutting insert has a split surface extending perpendicular to an axis and a torque receiving surface extending from the split surface toward a tip flank and adjacent to the tip flank. The cutting insert is detachably mounted on the insert mounting seat by a fastening screw.

### [Citation List]

### [Patent Document]

[Patent Document 1]
   European Patent No. 2408581

### SUMMARY OF INVENTION

### Technical Problem

However, in the indexable drill disclosed in Patent Document 1, the torque receiving surface of the cutting insert intersects with and is adjacent to the tip flank. A contact portion between the torque receiving surface and the torque transmitting surface of the drill main body is exposed in a tip portion of the indexable drill. Therefore, particularly when wet cutting is performed for drilling while a coolant is supplied, fine chips generated by the cutting become sludge together with the coolant, and the sludge is likely to enter the contact portion between the torque receiving surface and the torque transmitting surface from a tip side of the drill main body. Due to the sludge, the torque receiving surface or the torque transmitting surface may be worn, thereby causing a possibility that a drill life may be shortened.

The present invention aims to prevent a drill life from being shortened, by preventing sludge from entering a contact portion between a cutting insert and an insert mounting seat from a tip side of a drill main body.

### Solution to Problem

According to one aspect of the present invention, there is provided an indexable drill including a drill main body configured to have an insert mounting seat formed in a tip portion and to be rotated around an axis, and a cutting insert configured to be detachably mounted on the insert mounting seat.

An outer periphery of the tip portion of the drill main body has a main body chip discharge flute open on a tip surface of the drill main body and extending toward a rear end side of the drill main body. The cutting insert has an insert chip discharge groove open on a tip flank of the cutting insert and communicating with the main body chip discharge flute.

A cutting edge is formed in an intersecting ridgeline portion between a wall surface of the insert chip discharge groove facing a drill rotation direction and the tip flank. The insert mounting seat has a bottom surface facing a tip side of the drill main body, a wall surface extending to the tip side of the drill main body with respect to the bottom surface and facing the drill rotation direction, and a screw hole open on the bottom surface.

The cutting insert has a seating surface seated on the bottom surface toward the rear end side of the drill main body, a contact surface coming into contact with the wall surface in the drill rotation direction toward a side opposite to the drill rotation direction, a projection portion projecting to the side opposite to the drill rotation direction with respect to the contact surface on a tip side of the contact surface, and a mounting hole penetrating the seating surface from the tip flank. A clamp screw inserted into the mounting hole is screwed into the screw hole so that the cutting insert is mounted on the insert mounting seat.

In the indexable drill of the above-described aspect, in a state where the cutting insert is mounted on the insert mounting seat, a tip portion of the contact portion between the contact surface and the wall surface is covered by the projection portion projecting to the side opposite to the drill rotation direction on a tip side of the contact surface. That is, a tip of a contact interface between the contact surface and the wall surface is closed by the projection portion projecting to the side opposite to the drill rotation direction with respect to the contact surface. In this manner, it is possible to suppress a possibility that foreign substances such as sludge may enter from the tip of the contact portion between the contact surface and the wall surface.

According to the present invention, there is provided a cutting insert detachably mounted on the insert mounting seat of the drill main body in the drill main body of the above-described indexable drill. The cutting insert includes an insert chip discharge groove open on a tip flank of the insert main body and communicating with the main body chip discharge flute, a cutting edge formed in an intersecting ridgeline portion between a wall surface of the insert chip discharge groove facing a drill rotation direction and the tip flank, a seating surface seated on the bottom surface of the insert mounting seat toward a rear end side of the drill main body, a contact surface coming into contact with the wall surface of the insert mounting seat in a drill rotation direction toward a side opposite to the drill rotation direction, a projection portion projecting to the side opposite to the drill rotation direction with respect to the contact surface on a tip side of the contact surface, and a mounting hole penetrating the seating surface from the tip flank.

According to the present invention, there is provided a drill main body in the above-described indexable drill. In the drill main body, an insert mounting seat is formed in a tip portion of the drill main body. An outer periphery of the tip portion of the drill main body has a main body chip discharge flute open on a tip surface of the drill main body and extending to a rear end side of the drill main body. The insert mounting seat has a bottom surface facing a tip side, a wall surface extending to the tip side with respect to the bottom surface and facing a drill rotation direction, and a screw hole open on the bottom surface and into which the clamp screw is screwed.

The indexable drill, the cutting insert, and the drill main body which are described above have the projection portion projecting to the side opposite to the drill rotation direction with respect to the contact surface on the tip side of the contact surface (torque receiving surface) coming into contact with the wall surface (torque transmitting surface) of the insert mounting seat in the drill rotation direction toward the side opposite to the drill rotation direction of the cutting insert. The contact surface of the cutting insert is not continuous with the tip flank without being adjacent to the tip flank. In a state where the cutting insert is mounted on the insert mounting seat, the projection portion is disposed on the tip side of the contact portion between the contact surface and the wall surface. The contact portion is covered by the projection portion. Therefore, the contact portion between the contact surface of the cutting insert and the wall surface of the insert mounting seat is not exposed in the tip portion of the indexable drill.

Therefore, even when wet cutting is performed for drilling while a coolant is supplied, when fine chips generated by the cutting become sludge together with the coolant, it is possible to prevent the sludge from entering the contact portion between the contact surface of the cutting insert and the wall surface of the insert mounting seat from the tip side of the drill main body. Accordingly, it is possible to prevent the contact surface and the wall surface from being worn due to the sludge. Therefore, according to the indexable drill, the cutting insert, and the drill main body which are configured as described above, it is possible to prevent a drill life from being shortened due to the wear, and it is possible to perform stable drilling over a long period of time.

Incidentally, in the indexable drill configured in this way, when the cutting edge is worn and sharpness is dull while the drilling is performed over a long period of time, the tip flank of the cutting insert is re-polished. In some cases, a new cutting edge may be sharpened in the intersecting ridgeline portion between the re-polished tip flank and the wall surface of the insert chip discharge groove facing the drill rotation direction. In this case, the projection portion has a side surface adjacent to the tip flank toward the side opposite to the drill rotation direction. Accordingly, whether or not to re-polish the tip flank can be visually confirmed by confirming a width of the side surface in a direction of an axis.

In addition, in the indexable drill disclosed in Patent Document 1, the shaft portion is formed on the split surface of the cutting insert, and the hole portion is formed on the split surface of the insert mounting seat. The shaft portion is inserted into the hole portion. However, the hole portion is a circular hole having a continuous inner peripheral surface, and the hole portion is a blind hole that does not penetrate the drill main body. Accordingly, if a difference between an inner diameter of the hole portion and an outer diameter of the shaft portion of the cutting insert is small, air inside the hole portion is compressed when the shaft portion is inserted into the hole portion. Consequently, due to a pressure thereof, a force of pushing out the cutting insert acts.

Therefore, in the indexable drill having the above-described configuration, it is desirable to adopt a configuration as follows. One of the seating surface of the cutting insert and the bottom surface of the insert mounting seat has a shaft portion formed around the axis, and the other has a hole portion into which the shaft portion is fitted, and formed around the axis. The hole portion is open in the main body chip discharge flute or the insert chip discharge groove.

In this manner, when the hole portion is a blind hole having the bottom surface, even when a difference between the inner diameter of the hole portion and the outer diameter of the shaft portion is reduced, the air inside the hole portion is discharged from an opening portion to the main body chip discharge flute or the insert chip discharge groove. Therefore, a force of pushing out the cutting insert does not act. Deflection accuracy of the cutting edge of the cutting insert can be secured by reducing the difference between the inner diameter of the hole portion and the outer diameter of the shaft portion in this way.

In addition, the wall surface and the contact surface are formed so that an outer peripheral side of the drill main body has a wider width in a direction of the axis than an inner peripheral side of the drill main body. In this manner, it is possible to secure a large contact area between the contact surface and the wall surface on the outer peripheral side of the drill main body on which a largest cutting load acts during drilling. Therefore, it is possible to reduce stress acting on an outermost periphery of the drill main body of the insert mounting seat.

In the insert mounting seat, a corner portion where the bottom surface and the wall surface intersect with each other has a recess portion recessed with respect to the bottom surface and the wall surface and formed from the main body chip discharge flute to an outer peripheral surface of the drill main body. In this manner, it is possible to prevent the intersecting ridgeline portion between the seating surface and the contact surface of the cutting insert from impairing mounting stability of the cutting insert by interfering with the corner portion where the bottom surface and the wall surface of the insert mounting seat intersect with each other.

When the recess portion is formed, in a cross-sectional area of the recess portion, an opening portion on the outer peripheral surface side of the drill main body is larger than an opening portion on the main body chip discharge flute side. In this manner, it is possible to relax stress concentration on the recess portion on the outer peripheral surface side of the drill main body on which the largest cutting load acts during the drilling as described above. On the other hand, the cross-sectional area of the opening portion on the main body chip discharge flute side is small. Accordingly, rigidity of the projection wall portion of the drill main body in which the wall surface is formed is not impaired.

An intersecting ridgeline portion between the wall surface and the inner peripheral surface of the main body chip discharge flute is chamfered. In this manner, compared to when a sharp edge remains in the intersecting ridgeline portion, it is possible to prevent the intersecting ridgeline portion from being damaged.

### ADVANTAGEOUS EFFECTS OF INVENTION

As described above, according to the present invention, even in a case of wet cutting in which drilling is performed while a coolant is supplied, when chips become sludge together with the coolant, it is possible to prevent the sludge from entering the contact portion between the contact surface of the cutting insert and the wall surface of the insert mounting seat from the tip side of the drill main body. Therefore, it is possible to perform stable drilling over a long period of time by preventing the contact surface or the wall surface from being worn.

### BRIEF DESCRIPTION OF DRAWINGS

Fig. 1 is a perspective view showing a first embodiment of an indexable drill according to the present invention.
Fig. 2 is a perspective view when the embodiment shown in Fig. 1 is viewed in another direction.
Fig. 3 is a front view of the embodiment shown in Fig. 1.
Fig. 4 is a side view when the embodiment shown in Fig. 1 is viewed in a direction of an arrow A in Fig. 3.
Fig. 5 is a side view when the embodiment shown in Fig. 1 is viewed in a direction of an arrow B in Fig. 3.
Fig. 6 is a side view when the embodiment shown in Fig. 1 is viewed in a direction of an arrow C in Fig. 3.
Fig. 7 is an exploded view of the embodiment shown in Fig. 1.
Fig. 8 is a front view showing the first embodiment of a drill main body according to the present invention.
Fig. 9 is a side view when the embodiment shown in Fig. 8 is viewed in the direction of the arrow A.
Fig. 10 is a perspective view showing the first embodiment of a cutting insert according to the present invention.
Fig. 11 is a perspective view when the embodiment shown in Fig. 10 is viewed in another direction.
Fig. 12 is a front view of the embodiment shown in Fig. 10.
Fig. 13 is a side view when the embodiment shown in Fig. 10 is viewed in the direction of the arrow A in Fig. 12.
Fig. 14 is a side view when the embodiment shown in Fig. 10 is viewed in the direction of the arrow B in Fig. 12.
Fig. 15 is a perspective view showing a second embodiment of the indexable drill according to the present invention.
Fig. 16 is a perspective view when the embodiment shown in Fig. 15 is viewed in another direction.
Fig. 17 is a front view of the embodiment shown in Fig. 15.
Fig. 18 is a side view when the embodiment shown in Fig. 15 is viewed in the direction of the arrow A in Fig. 16.
Fig. 19 is a side view when the embodiment shown in Fig. 15 is viewed in the direction of the arrow B in Fig. 16.
Fig. 20 is a side view when the embodiment shown in Fig. 15 is viewed in the direction of the arrow C in Fig. 16.
Fig. 21 is an exploded view of the embodiment shown in Fig. 15.
Fig. 22 is a front view showing the second embodiment of the drill main body according to the present invention.
Fig. 23 is a side view when the embodiment shown in Fig. 22 is viewed in the direction of the arrow A.
Fig. 24 is a side view when the embodiment shown in Fig. 22 is viewed in the direction of the arrow B.
Fig. 25 is a perspective view showing the second embodiment of the cutting insert according to the present invention.
Fig. 26 is a perspective view when the embodiment shown in Fig. 25 is viewed in another direction.
Fig. 27 is a front view of the embodiment shown in Fig. 25.
Fig. 28 is a side view when the embodiment shown in Fig. 25 is viewed in the direction of the arrow A in Fig. 27.
Fig. 29 is a side view when the embodiment shown in Fig. 25 is viewed in the direction of the arrow B in Fig. 27.
Fig. 30 is a side view when the embodiment shown in Fig. 25 is viewed in the direction of the arrow C in Fig. 27.
Fig. 31 is an exploded sectional view taken along an axis of the cutting insert and the drill main body of the embodiment shown in Fig. 15.

### DESCRIPTION OF EMBODIMENTS

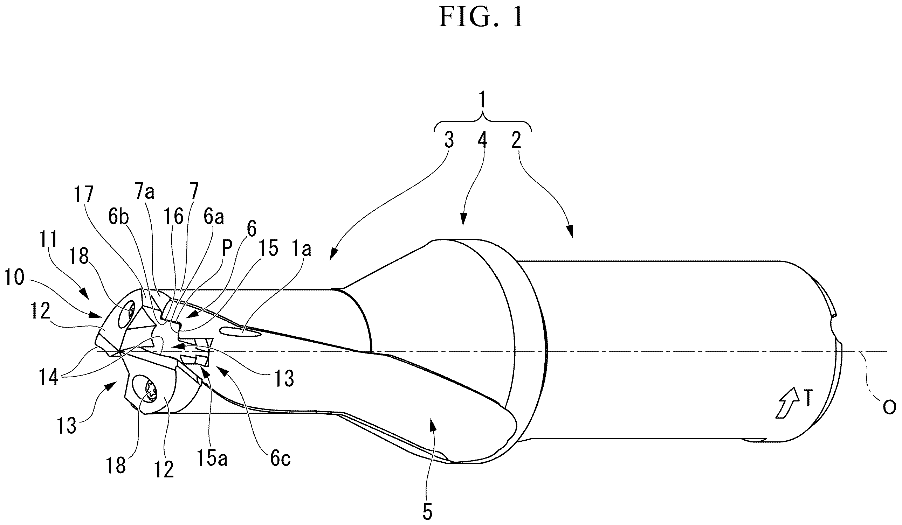

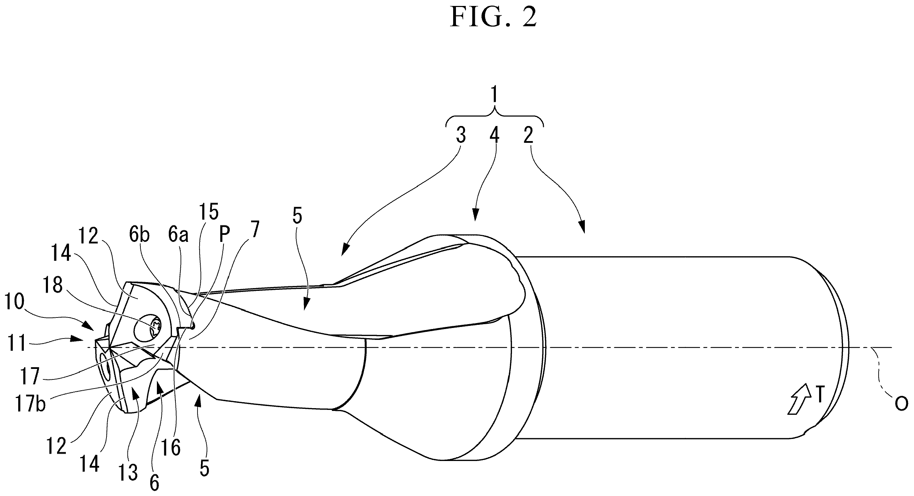

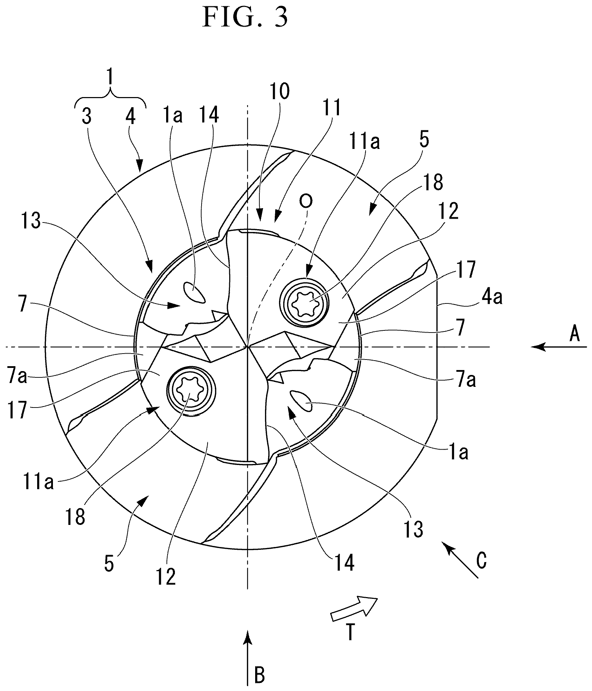

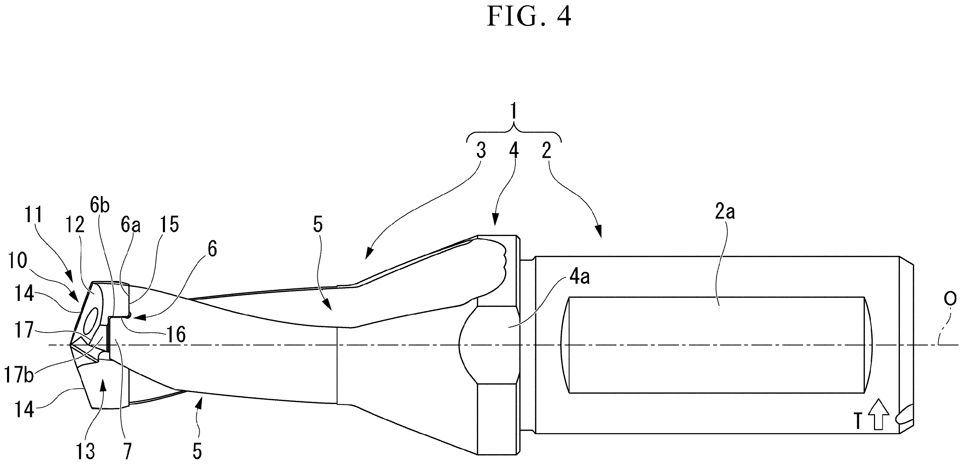

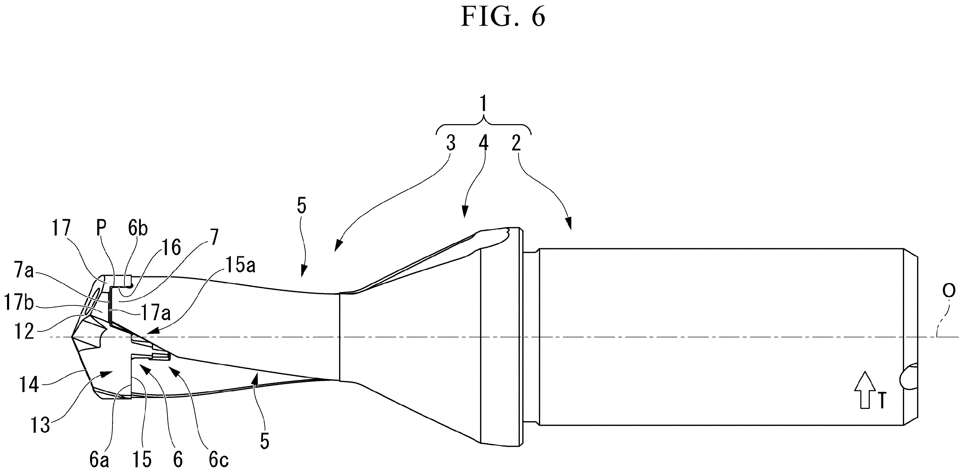

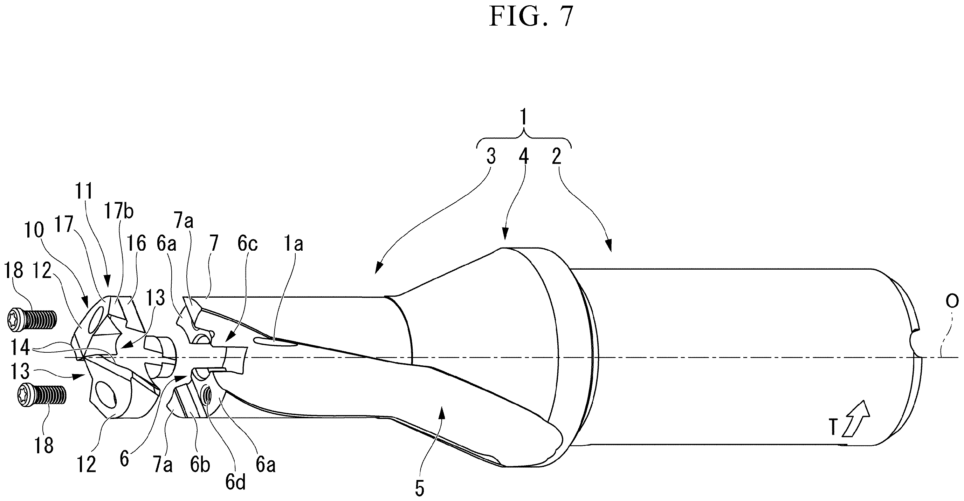

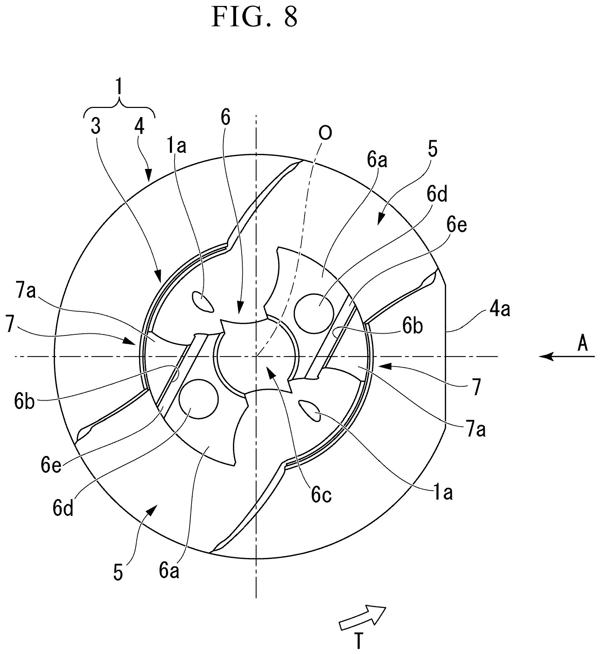

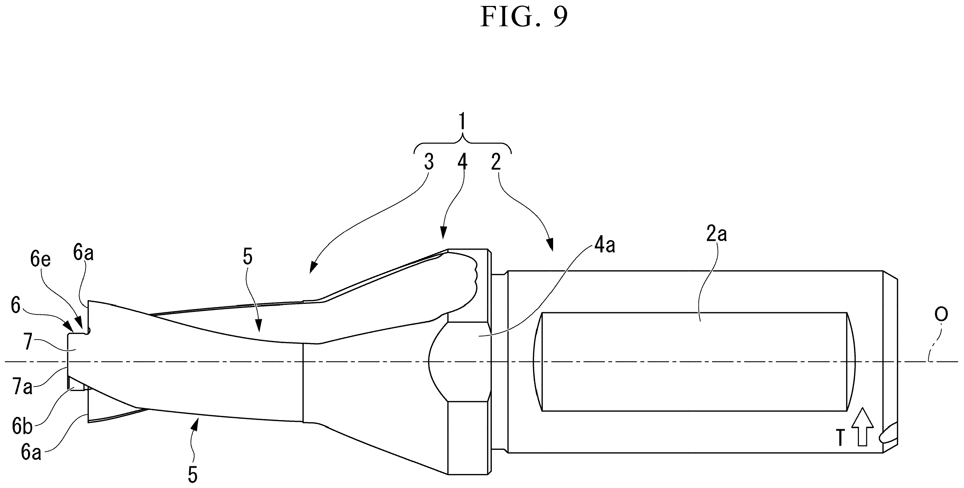

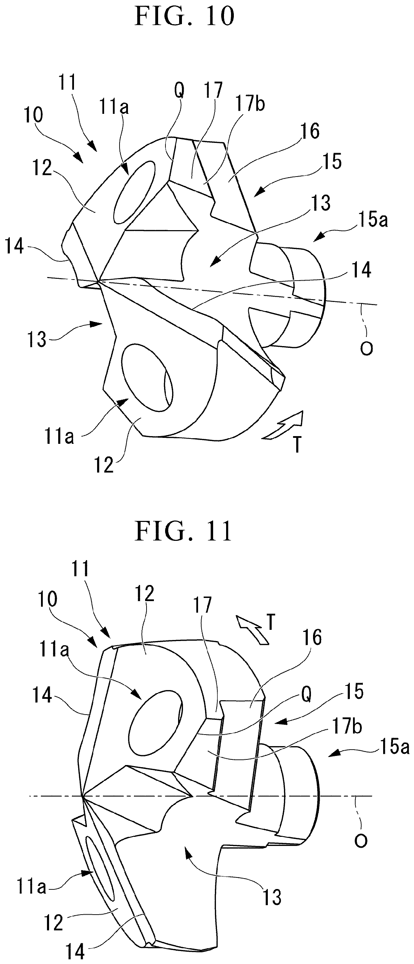

Figs. 1 to 6 show a first embodiment of an indexable drill according to the present invention, and Fig. 7 shows an exploded view of the indexable drill of the first embodiment. Figs. 8 and 9 show the first embodiment of a drill main body used for the indexable drill of the first embodiment, and Figs. 10 to 14 show the first embodiment of a cutting insert detachably mounted on the drill main body.

A drill main body 1 is formed of a metal material such as a steel material in a multi-stage columnar shape formed around an axis O. A rear end portion (right side portion in Figs. 1, 2, 4 to 7, and 9) of the drill main body 1 is a large diameter shank portion 2, and a tip portion (left side portion in Figs. 1, 2, 4 to 7, and 9) is a cutting edge portion 3 on which an insert main body 11 of a cutting insert 10 is detachably mounted. In the present specification, unless otherwise defined, a "tip side" will be referred to as a tip side of the drill main body 1, and a "rear end side" will be referred to as a rear end side of the drill main body 1. The cutting edge portion 3 has a smaller diameter than the shank portion 2. A flange portion 4 whose diameter is decreased after being increased one stage toward the tip side than the shank portion 2 to have the diameter the same as that of the cutting edge portion 3 is formed between the shank portion 2 and the cutting edge portion 3.

In the indexable drill, the shank portion 2 of the drill main body 1 is gripped by a spindle of a machine tool. While being rotated in a drill rotation direction T around the axis O, the shank portion 2 is fed to the tip side in a direction of the axis O. In this manner, drilling is performed on a workpiece by the cutting edge of the cutting insert 10. A flat surface 2a extending parallel to the axis O is formed on an outer peripheral surface of the shank portion 2 with an interval between a tip and a rear end of the shank portion 2. A flat surface 4a parallel to the flat surface 2a is also formed in a portion of the flange portion 4 whose diameter is increased than the shank portion 2.

In an outer peripheral portion of the drill main body 1, a plurality of main body chip discharge flutes 5 are formed at an interval in a circumferential direction from a tip of the cutting edge portion 3 to a front of a rear end of the flange portion 4. In the present embodiment, two main body chip discharge flutes 5 are formed at an equal interval in the circumferential direction. The main body chip discharge flutes 5 have a spiral shape that gently twists to a side opposite to the drill rotation direction T around the axis O toward a rear end side of the drill main body 1.

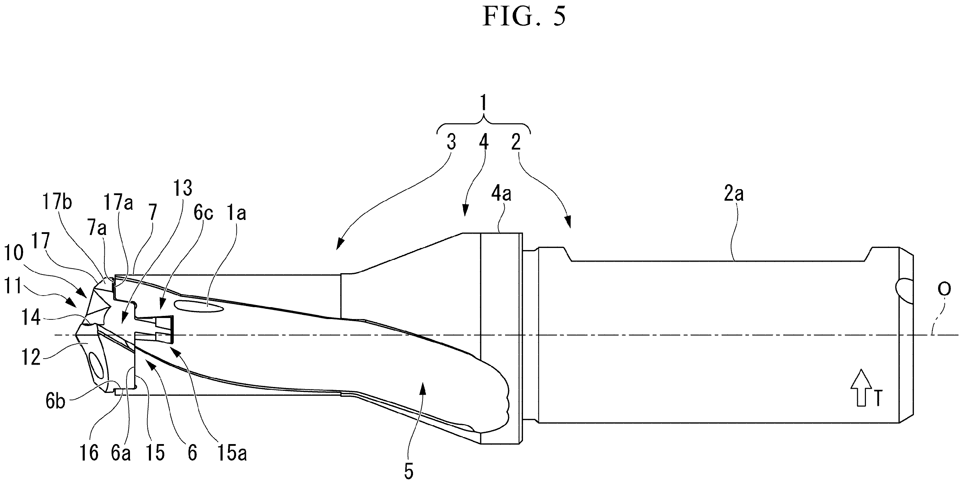

An insert mounting seat 6 is formed in a tip portion of the cutting edge portion 3. As shown in Figs. 5, 7, and 8, the insert mounting seat 6 is formed by cutting out a central portion of the tip of the cutting edge portion 3 in a rectangular shape when viewed in a direction perpendicular to the axis O. As shown in Fig. 8, a cutout region extends in a radial direction with respect to the axis O, and spreads from one main body chip discharge flute 5 to the other main body chip discharge flute 5. A width of the cutout rectangular region spreads from a wall surface facing the drill rotation direction T in each of the main body chip discharge flutes 5 to a wall surface facing a side opposite to the drill rotation direction T. When viewed in a direction perpendicular to the axis O, the cutout region is flat while a depth in the direction of the axis O is smaller than a width in the radial direction.

As shown in Fig. 8, the insert mounting seat 6 includes a bottom surface 6a extending in a direction perpendicular to the axis O and facing the tip side of the drill main body 1, and two wall surfaces 6b extending perpendicular to the bottom surface 6a from both side portions of the bottom surface 6a and parallel to the axis O, and facing the drill rotation direction T. The wall surfaces 6b face each other, and are parallel to each other. Each of the wall surfaces 6b has a rectangular shape having a longitudinal direction in the radial direction with respect to the axis O in the present embodiment.

In the present embodiment, a hole portion 6c having a circular cross section with a constant inner diameter around the axis O to be open in a central portion of the bottom surface 6a is formed to extend to a rear end side of the drill main body 1. The inner diameter of the hole portion 6c is larger than a diameter of a virtual circle inscribed in the bottom surface of the main body chip discharge flute 5 facing an outer peripheral side of the drill main body 1 in a cross section orthogonal to the axis O. Therefore, both sides of the hole portion 6c are open in a rectangular shape on the bottom surface of each of the main body chip discharge flutes 5, and the bottom surface 6a of the insert mounting seat 6 is divided into two portions by the hole portion 6c so that the two portions are rotationally symmetric around the axis O by 180°. The hole portion 6c is a blind hole having a bottom surface facing the tip side of the drill main body 1.

Each of screw holes 6d having a center at an equal distance from the axis O is formed at an interval from the hole portion 6c on the bottom surface 6a divided into the two portions by the hole portion 6c. In the drill main body 1, a coolant hole 1a is formed toward the tip side along the axis O from a rear end surface of the shank portion 2. The coolant hole 1a is branched into two portions in front of the insert mounting seat 6. Each tip is open on the wall surface of the main body chip discharge flute 5 which faces the side opposite to the drill rotation direction T.

On the side opposite to the drill rotation direction T of the wall surface 6b of the insert mounting seat 6, a projection wall portion 7 surrounded by the wall surface 6b, the outer peripheral surface of the cutting edge portion 3, and the wall surface of the main body chip discharge flute 5 which faces the side opposite to the drill rotation direction T is left. A tip surface 7a of the projection wall portion 7 is a flat surface perpendicular to the axis O. In the present embodiment, as shown in Figs. 8 and 9, in a corner portion where the bottom surface 6a and the wall surface 6b intersect with each other, a recess portion 6e having a circular cross section with a constant inner diameter and recessed from the bottom surface 6a and the wall surface 6b is formed as a flank portion. The recess portion 6e is formed to avoid interference between the bottom surface 6a and the wall surface 6b of the insert mounting seat 6 and the cutting insert 10. Furthermore, the insert mounting seat 6 and the two main body chip discharge flutes 5 each have a shape in which both are rotationally symmetric around the axis O by 180°.

As shown in Figs. 10 to 14, the cutting insert 10 detachably mounted on the insert mounting seat 6 includes an insert main body 11 formed of a hard material such as a cemented carbide harder than that of the drill main body 1. The insert main body 11 has a shape rotationally symmetric around the axis O of the drill main body 1 by 180° in a state of being mounted on the insert mounting seat 6.

In a state of being mounted on the insert mounting seat 6, the insert main body 11 has a tip flank 12 facing the tip side of the drill main body 1, and an insert chip discharge groove 13 open in the tip flank 12 to communicate with each of the two main body chip discharge flutes 5. A cutting edge 14 is formed in an intersecting ridgeline portion between the wall surface of the insert chip discharge groove 13 facing the drill rotation direction T and the tip flank 12. The tip flank 12 is inclined toward the rear end side of the drill main body 1 as the tip flank 12 faces toward the side opposite to the drill rotation direction T and the outer peripheral side of the drill main body 1. In this manner, the cutting edge 14 is provided with a flank angle and a tip angle.

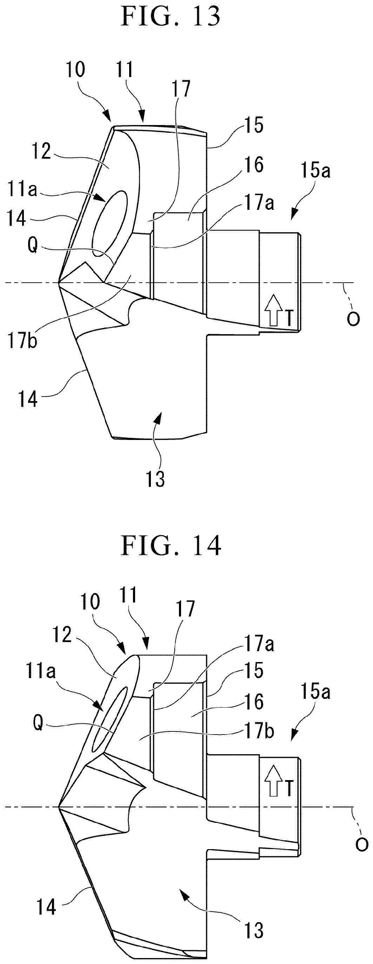

In a state of being mounted on the insert mounting seat 6, a rear end surface of the insert main body 11 is a flat surface perpendicular to the axis O as shown in Figs. 13 and 14, and serves as a seating surface 15 seated on the bottom surface 6a of the insert mounting seat 6 toward a rear end side of the drill main body 1. In a central portion of the seating surface 15, a multi-stage columnar shaft portion 15a having a large diameter in the tip portion and a slightly small diameter in the rear end portion around the axis O is formed to project to the rear end side. The outer diameter of the tip portion of the shaft portion 15a is set to have a size that can be fitted into the hole portion 6c of the insert mounting seat 6.

In addition, each of contact surfaces 16 coming into contact with the wall surface 6b of the insert mounting seat 6 in the drill rotation direction T toward the side opposite to the drill rotation direction T is formed to the outer peripheral surface of the insert main body 11 from the wall surface of the two insert chip discharge grooves 13 facing the side opposite to the drill rotation direction T. The contact surfaces 16 are formed to perpendicularly intersect with the seating surface 15, to be parallel to the axis O, and to extend parallel to each other. The contact surface 16 of the present embodiment has a rectangular shape having a longitudinal direction in the radial direction with respect to the axis O.

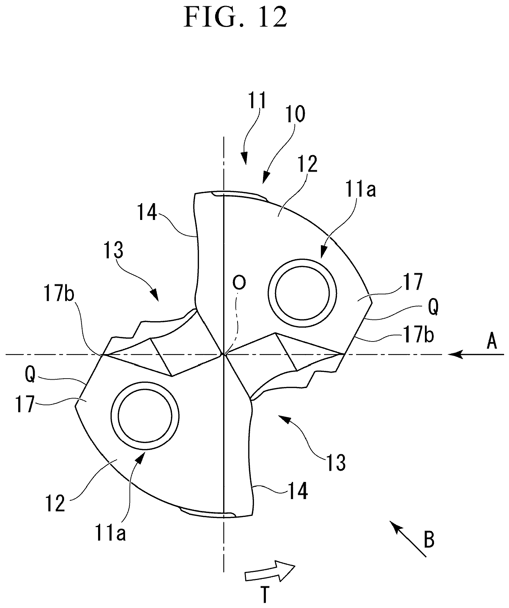

In the insert main body 11, two mounting holes 11a penetrating the seating surface 15 from the tip flank 12 are formed at an interval from the shaft portion 15a. In a state where the contact surface 16 comes into contact with the wall surface 6b of the insert mounting seat 6, the mounting holes 11a are disposed to be coaxial with each of the two screw holes 6d of the insert mounting seat 6. As shown in Fig. 12, the inner diameter of the mounting hole 11a gradually decreases toward the seating surface 15 side from the opening portion on the tip flank 12 side, and is constant on the seating surface 15 side.

As shown in Figs. 10 and 11, the insert main body 11 of the cutting insert 10 has projection portions 17 projecting to the side opposite to the drill rotation direction T from the contact surface 16 on the tip side of the contact surface 16. Therefore, in the projection portions 17, the shaft portion 15a of the insert main body 11 is fitted into the hole portion 6c of the insert mounting seat 6. The seating surface 15 is brought into close contact with the bottom surface 6a. In a state where the contact surface 16 is brought into contact with the wall surface 6b, the projection portions 17 are disposed without any substantial gap on the tip side of the contact portion P between the contact surface 16 and the wall surface 6b, and cover the tip portion of the contact portion P. In this manner, the contact portion P between the contact surface 16 and the wall surface 6b is closed by the projection portion 17 without any substantial gap, and foreign substances are prevented from entering from the tip.

That is, in a state where the seating surface 15 of the insert main body 11 is brought into close contact with the bottom surface 6a of the insert mounting seat 6 as described above, a rear end surface 17a of the projection portion 17 facing the rear end side of the drill main body 1 is a flat surface that can be in slidable contact with the tip surface 7a of the projection wall portion 7 which is a flat surface perpendicular to the axis O, and is perpendicular to the axis O. In this way, the rear end surface 17a of the projection portion 17 is brought into contact with the tip surface 7a of the projection wall portion 7. Accordingly, the tip portion of the contact portion P between the contact surface 16 and the wall surface 6b is covered by the projection portion 17.

A side surface 17b of the projection portion 17 facing the side opposite to the drill rotation direction T extends parallel to the contact surface 16, and is adjacent to the tip flank 12. That is, the side surface 17b of the projection portion 17 extends parallel to the axis O and perpendicular to the rear end surface 17a, and intersects with the tip flank 12 of the insert main body 11 at an angle in an intersecting ridgeline Q. The projection portion 17 of the present embodiment does not cover the whole tip surface 7a of the projection wall portion 7 of the drill main body 1, and the tip surface 7a is exposed on the side of the side surface 17b opposite to the drill rotation direction T. When the tip of the contact portion P between the contact surface 16 and the wall surface 6b is covered by the rear end surface 17a of the projection portion 17, an advantageous effect of suppressing sludge entrance can be obtained. However, the projection portion 17 may cover the whole tip surface 7a of the projection wall portion 7 of the drill main body 1.

In the insert main body 11 of the cutting insert 10 configured in this way, as described above, the shaft portion 15a is fitted into the hole portion 6c of the insert mounting seat 6. The seating surface 15 is brought into close contact with the bottom surface 6a, and the contact surface 16 is brought into contact with the wall surface 6b. Thereafter, as shown in Fig. 7, the clamp screw 18 inserted into the mounting hole 11a from the tip side of the drill main body 1 is screwed into the screw hole 6d. In this manner, the insert main body 11 of the cutting insert 10 is detachably mounted on the insert mounting seat 6.

In the indexable drill and the cutting insert 10 which are configured in this way, while a coolant such as a cutting fluid is ejected from the coolant hole 1a formed in the drill main body 1, the cutting edge 14 of the insert main body 11 in the cutting insert 10 performs drilling on a workpiece by cutting the workpiece. In this case, the projection portion 17 projecting to the side opposite to the drill rotation direction T from the contact surface 16 is formed on the tip side of the contact surface 16 coming into contact with the wall surface 6b of the insert mounting seat 6 in the insert main body 11. The projection portion 17 is disposed on the tip side of the contact portion P between the contact surface 16 and the wall surface 6b to cover the tip portion of the contact portion P. Accordingly, the tip portion of the contact portion P is closed by the projection portion 17, and the contact portion P is not exposed in the tip portion of the indexable drill.

Therefore, in wet cutting in which the cutting fluid is ejected as described above, even when fine chips generated by the cutting become sludge together with the cutting fluid, it is possible to prevent the sludge from entering the contact portion P between the contact surface 16 of the cutting insert 10 and the wall surface 6b the insert mounting seat 6 from the tip side of the drill main body 1. Therefore, it is possible to prevent the contact surface 16 or the wall surface 6b from being worn due to the sludge. It is possible to prevent a life of the indexable drill from being shortened due to the wear, and thus, it is possible to perform stable drilling over a long period of time.

In the present embodiment, in the projection portion 17, the side surface 17b adjacent to the tip flank 12 toward the side opposite to the drill rotation direction T is formed to intersect with the tip flank 12 at an angle in the intersecting ridgeline Q. Therefore, when the cutting edge 14 is worn and sharpness becomes dull, the tip flank 12 is re-polished. When a new cutting edge 14 is sharpened in the intersecting ridgeline portion between the insert chip discharge groove 13 and the wall surface facing the drill rotation direction T, the width of the side surface 17b between the intersecting ridgeline Q and the seating surface 15 in the direction of the axis O is confirmed. In this manner, it is possible to visually confirm whether or not to re-polish the cutting edge 14. Therefore, it is possible to avoid a situation in which the projection portion 17 is excessively thinned and the projection wall portion 7 of the drill main body 1 is worn.

In the present embodiment, the shaft portion 15a around the axis O is formed on the seating surface 15 of the insert main body 11 of the cutting insert 10, and the hole portion 6c into which the shaft portion 15a can be fitted is formed around the axis O on the bottom surface 6a of the insert mounting seat 6. Therefore, the cutting insert 10 can be accurately mounted around the axis O of the drill main body 1, and deflection accuracy of the cutting edge 14 can be secured.

The hole portion 6c is open in the main body chip discharge flute 5 of the drill main body 1. Accordingly, air inside the hole portion 6c can be discharged when the shaft portion 15a is fitted into the hole portion 6c, and the air inside the hole portion 6c can avoid being compressed. Therefore, a force of pushing out the insert main body 11 to the tip side of the drill main body 1 does not act due to a pressure of the compressed air. Therefore, according to the present embodiment, the cutting insert 10 can be firmly and stably mounted on the insert mounting seat 6.

In the present embodiment, as described above, the shaft portion 15a around the axis O is formed on the seating surface 15 of the insert main body 11, and the hole portion 6c into which the shaft portion 15a can be fitted is formed around the axis O on the bottom surface 6a of the insert mounting seat 6. However, conversely, the hole portion around the axis O may be formed on the seating surface 15 of the insert main body 11, and the shaft portion that can be fitted into the hole portion may be formed around the axis O on the bottom surface 6a of the insert mounting seat 6. In this manner, the hole portion may be open in the insert chip discharge groove 13.

In addition, in the present embodiment, the coolant hole 1a is formed in the drill main body 1 from the rear end surface of the shank portion 2 toward the tip side along the axis O. The coolant hole 1a is branched into the two portions in front of the insert mounting seat 6, and is open on the wall surface of the main body chip discharge flute 5 facing the side opposite to the drill rotation direction T. However, alternatively, two coolant holes may be formed from the rear end surface of the shank portion 2 toward the tip side of the drill main body 1 after passing between the two main body chip discharge flutes 5. The coolant holes may be open on the wall surface facing the side opposite to the drill rotation direction T of the main body chip discharge flute 5 in front of the insert mounting seat 6.

Furthermore, in the present embodiment, in a state where the contact surface 16 is brought into contact with the wall surface 6b of the insert mounting seat 6, each of the two mounting holes 11a penetrating the seating surface 15 from the tip flank 12 are disposed in the insert main body 11 to be coaxial with each of the two screw holes 6d of the insert mounting seat 6. However, alternatively, the two mounting holes 11a may be disposed to be slightly eccentric to the side opposite to the contact surface 16 with respect to the two screw holes 6d of the insert mounting seat 6.

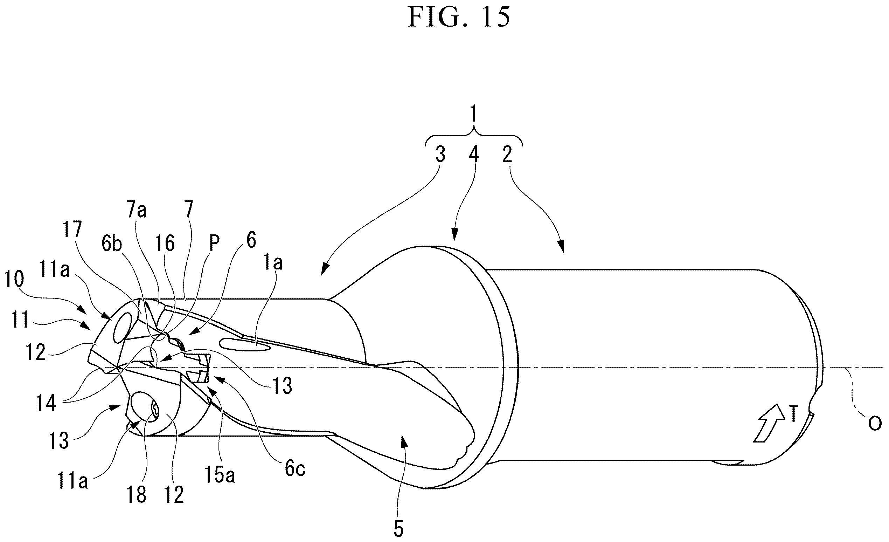

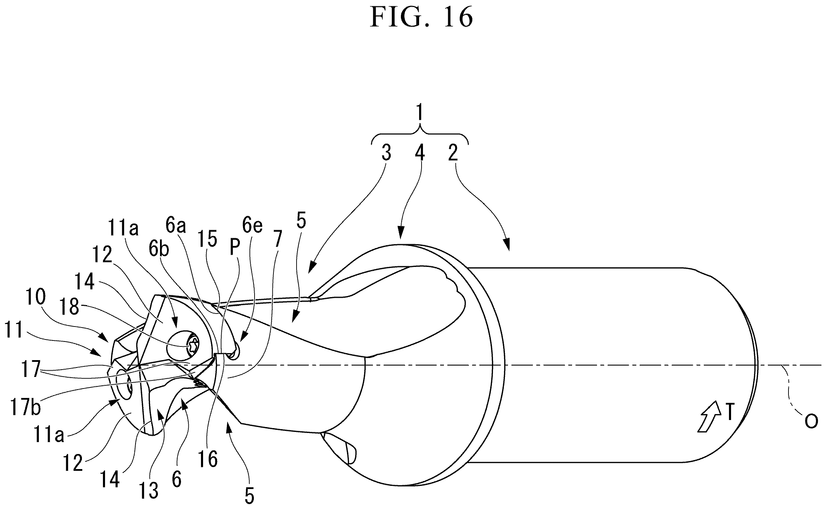

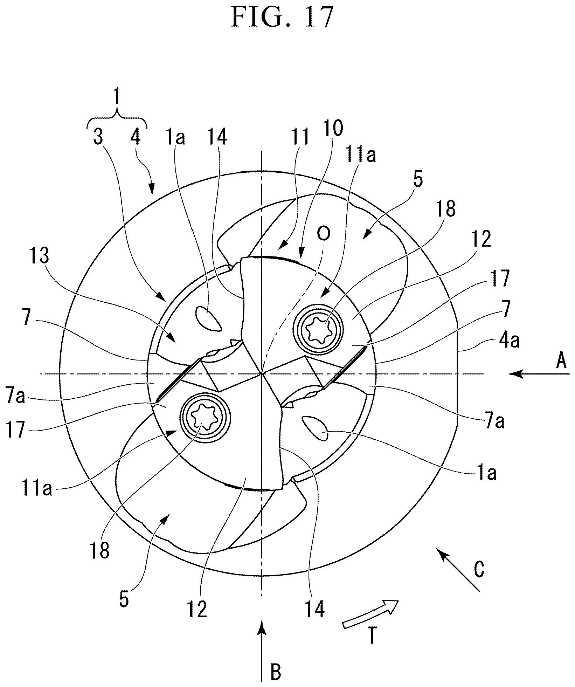

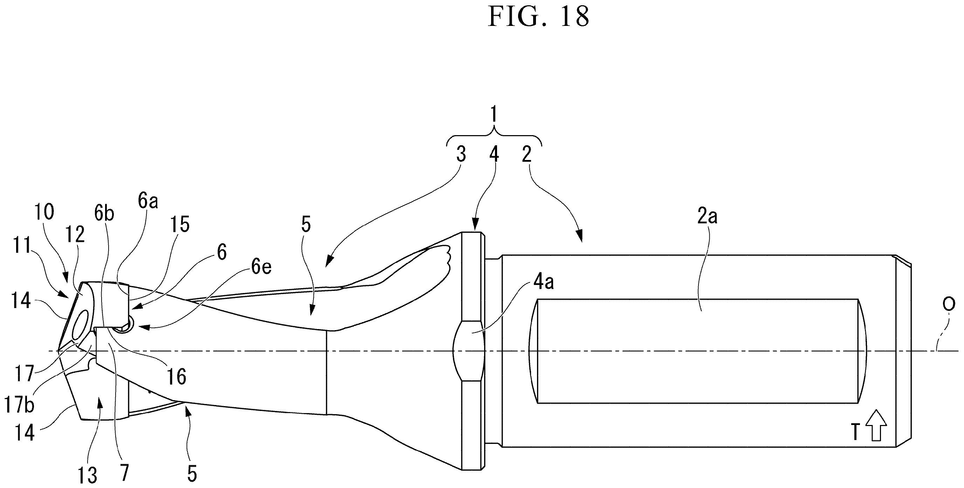

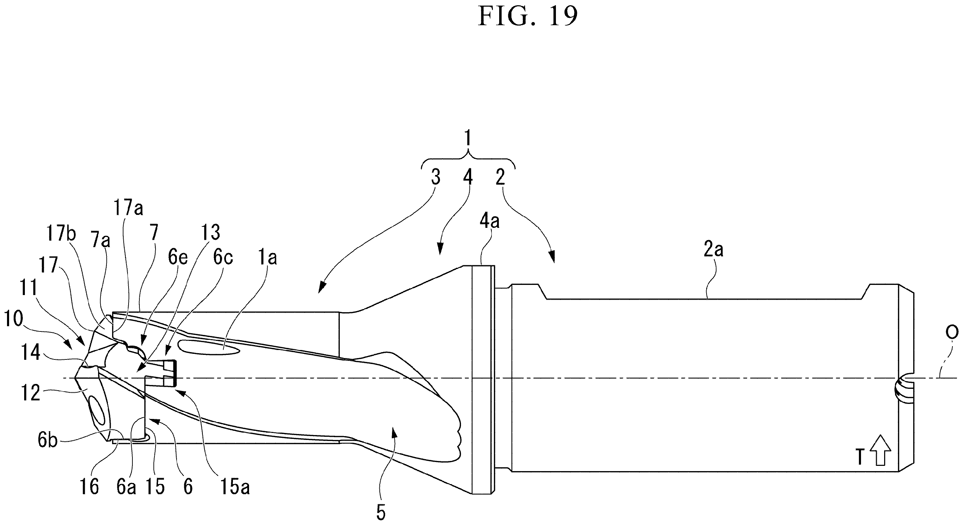

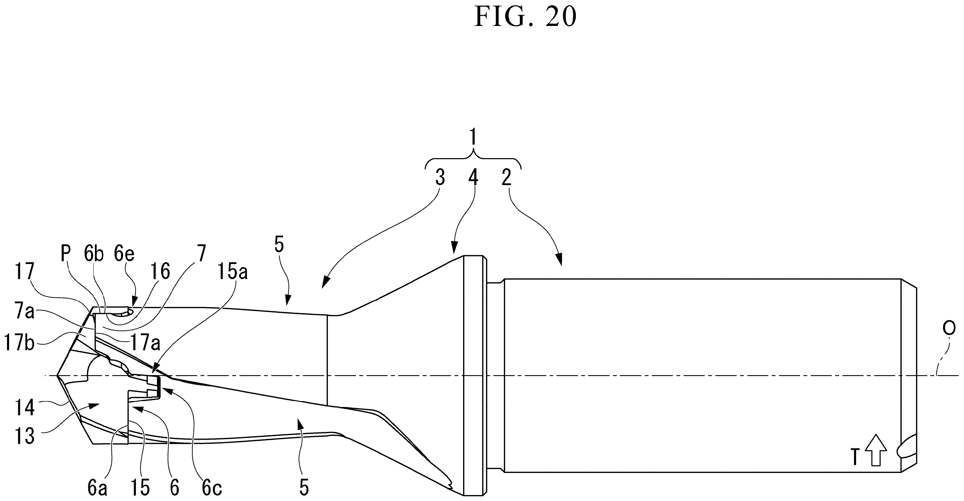

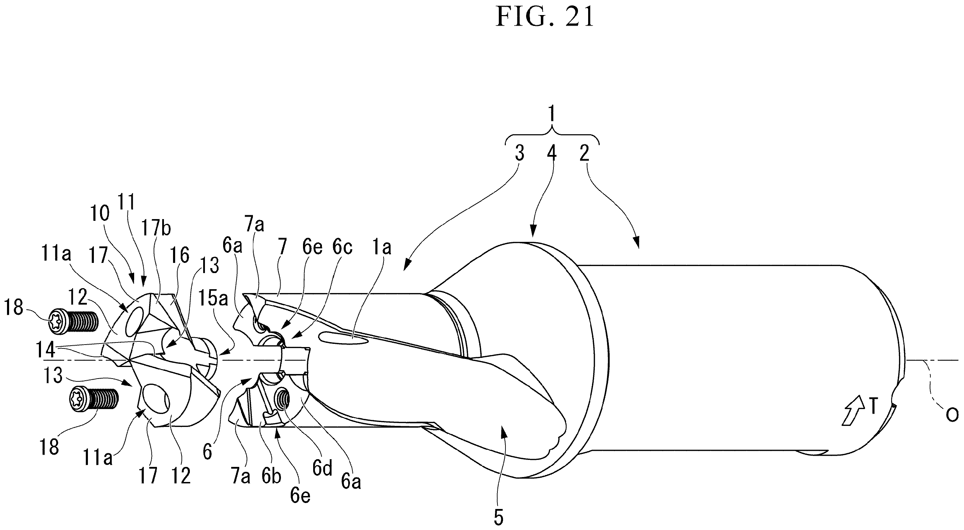

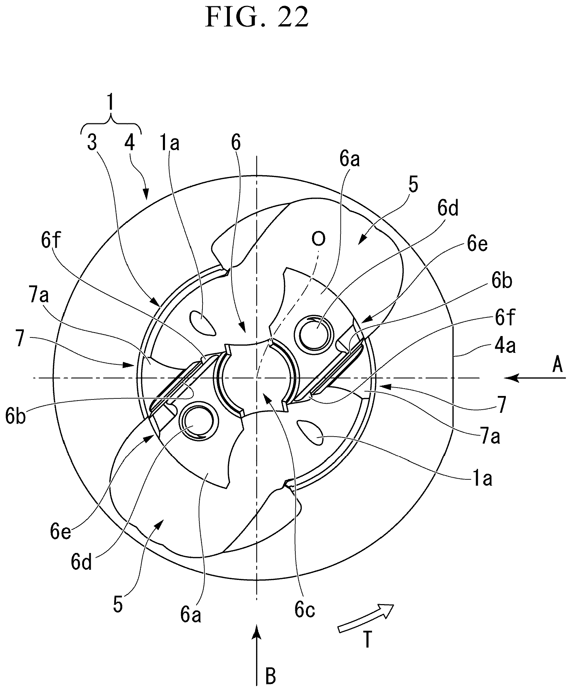

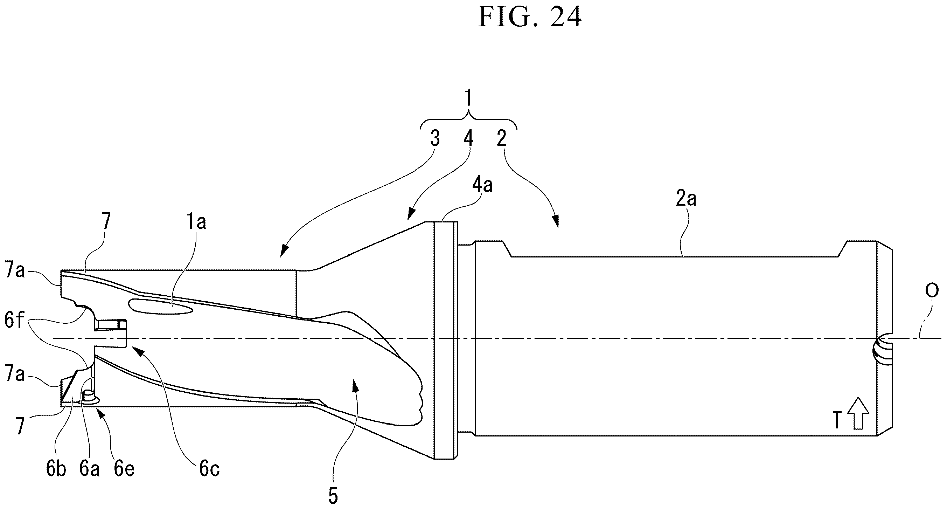

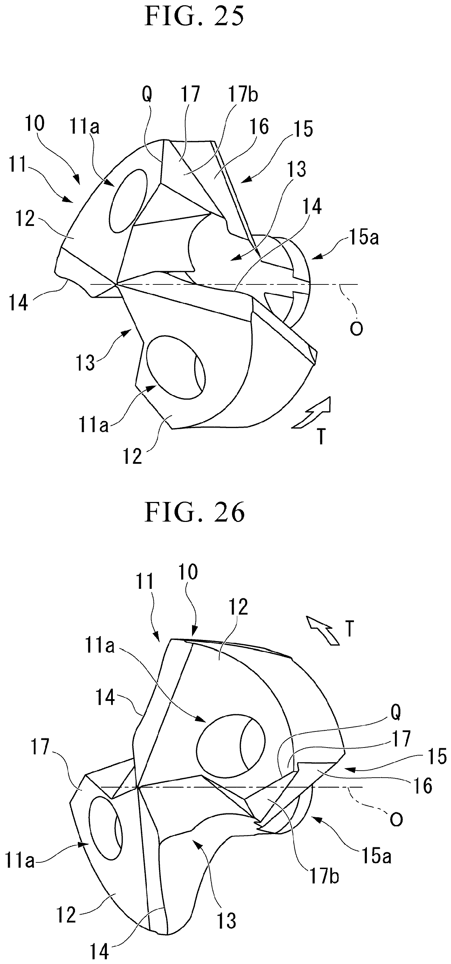

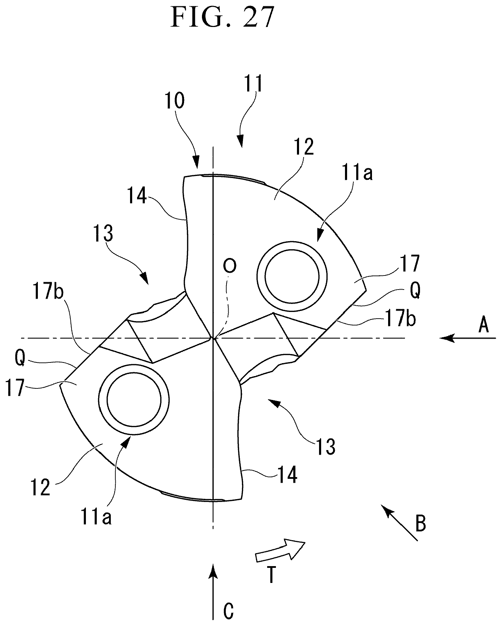

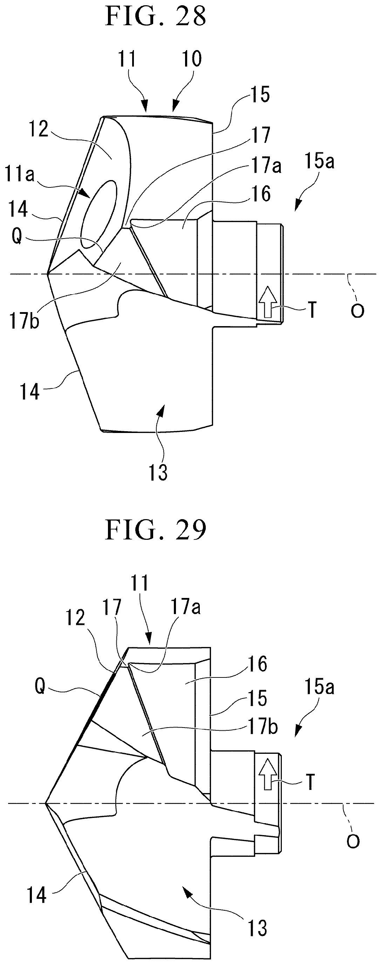

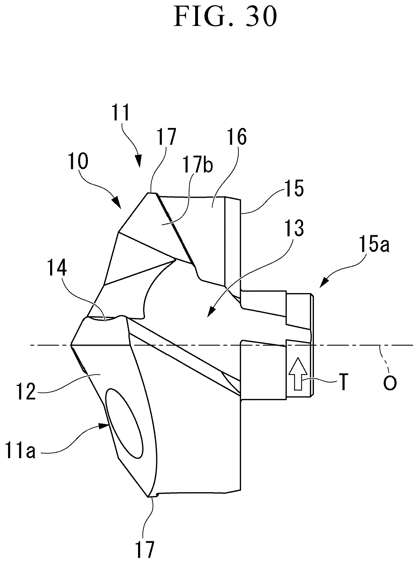

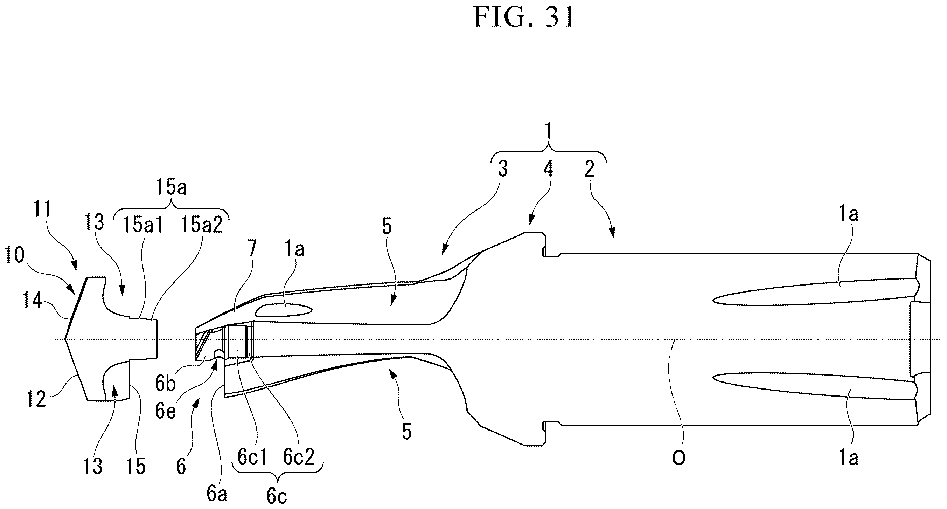

Next, Figs. 15 to 20 show a second embodiment of the indexable drill according to the present invention, and Figs. 21 and 31 show an exploded view of the indexable drill according to the second embodiment. Figs. 22 to 24 show the second embodiment of the drill main body according to the present invention of the indexable drill of the second embodiment, and Figs. 25 to 30 show the second embodiment of the cutting insert 10 detachably mounted on the drill main body. In the indexable drill, the drill main body, and the cutting insert 10 of the second embodiment, the same reference numerals will be assigned to elements common to those of the first embodiment shown in Figs. 1 to 14. Contents which are not described later are incorporated with reference to the description in the first embodiment.

In the first embodiment, the wall surface 6b of the insert mounting seat 6 facing the drill rotation direction T and the contact surface 16 of the insert main body 11 of the cutting insert 10 which is brought into contact with the wall surface 6b have the rectangular shape. The width of the wall surface 6b and the contact surface 16 in the direction of the axis O is constant in the radial direction with respect to the axis O. In contrast, in the second embodiment, on the wall surface 6b and the contact surface 16, the width on the outer peripheral side of the drill main body 1 in the direction of the axis O is larger than that on the inner peripheral side.

In the second embodiment, as shown in Figs. 21, 24, 29, and 30, the wall surface 6b and the contact surface 16 are formed so that the width in the direction of the axis O is gradually widened to the outer peripheral side from the inner peripheral side of the drill main body 1. The wall surface 6b and the contact surface 16 are formed in a substantially trapezoidal shape.

In addition, in the first embodiment, the recess portion 6e serving as the flank portion formed in the corner portion where the bottom surface 6a and the wall surface 6b of the insert mounting seat 6 intersect with each other has the circular cross section with the constant inner diameter. Therefore, the recess portion 6e has a constant cross-sectional area. In contrast, in the second embodiment, a cross-sectional area of the recess portion 6e is formed so that the opening portion on the outer peripheral surface side of the drill main body 1 is larger than the opening portion on the main body chip discharge flute 5 side.

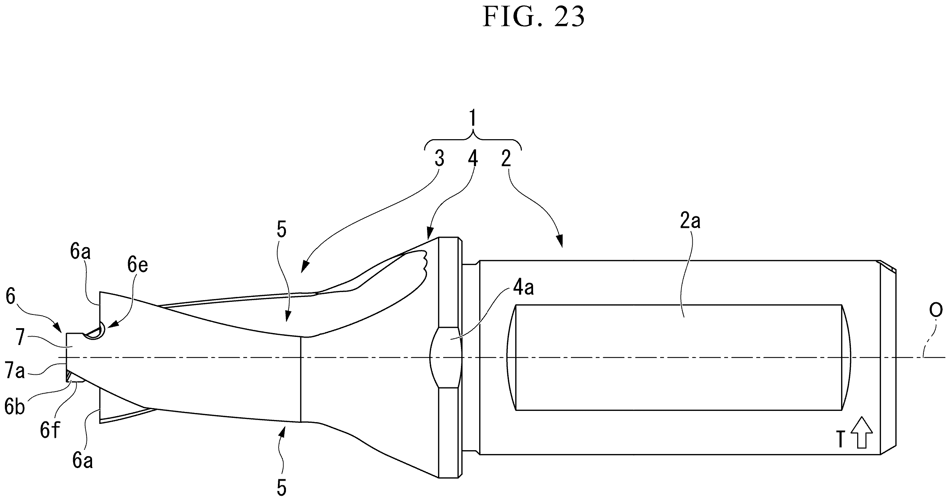

In the second embodiment, as shown in Fig. 22, in order from the opening portion on the main body chip discharge flute 5 side toward the opening portion on the outer peripheral surface side of the drill main body 1, the recess portion 6e is formed by a circular cross-sectional portion and a portion whose cross section having a cross-sectional area larger by two stages than that of the circular cross-sectional portion has a recess curve shape. In the recess portion 6e, the length of the circular cross-sectional portion open to the main body chip discharge flute 5 side is longest. In addition, as shown in Figs. 22 and 23, in the second embodiment, the intersecting ridgeline portion between the wall surface 6b of the insert mounting seat 6 and the inner peripheral surface of the main body chip discharge flute 5 is chamfered, thereby forming a chamfered portion 6f that intersects with the wall surface 6b and the inner peripheral surface of the main body chip discharge flute 5.

In the indexable drill, the cutting insert 10, and the drill main body 1 of the second embodiment, an advantageous effect the same as that of the first embodiment can be obtained as a matter of course. First, the wall surface 6b of the insert mounting seat 6 and the contact surface 16 of the cutting insert 10 are formed so that the width in the direction of the axis O on the outer peripheral side of the drill main body 1 is wider than the inner peripheral side. Accordingly, it is possible to secure a large contact area between the wall surface 6b and the contact surface 16 on the outer peripheral side of the drill main body 1 on which the largest cutting load acts during the drilling.

Therefore, stress acting on the outermost periphery of the drill main body 1 of the insert mounting seat 6 can be reduced. The cutting insert 10 can be stably held against the cutting load during the drilling, and the drilling can be accurately performed. In particular, in the present embodiment, the wall surface 6b and the contact surface 16 are formed so that the width in the direction of the axis O is gradually widened from the inner peripheral side toward the outer peripheral side of the drill main body 1. Accordingly, it is possible to secure the large contact area between the wall surface 6b and the contact surface 16.

In the second embodiment, the cross-sectional area of the recess portion 6e formed to be recessed from the bottom surface 6a and the wall surface 6b which serves as the flank portion in the corner portion where the bottom surface 6a and the wall surface 6b of the insert mounting seat 6 intersect with each other is formed so that the opening portion on the outer peripheral surface side of the drill main body 1 is larger than the opening portion on the main body chip discharge flute 5 side. Therefore, as described above, stress concentration on the recess portion 6e can be relaxed on the outer peripheral surface side of the drill main body 1 on which the largest cutting load acts during the drilling.

On the other hand, the opening portion on the main body chip discharge flute 5 side has a small cross-sectional area. Accordingly, rigidity of the projection wall portion 7 of the drill main body 1 in which the wall surface 6b is formed is not impaired, and stable holding of the cutting insert 10 is not disturbed. In particular, in the present embodiment, the recess portion 6e is formed so that the cross-sectional area gradually increases, and the stage length of the circular cross-sectional portion on the main body chip discharge flute 5 side is the longest. Accordingly, the rigidity of the projection wall portion 7 can be more reliably maintained. A cross-sectional shape of the recess portion 6e may be a circular shape in any stage, or may be a non-circular recess curve.

As in the second embodiment, the intersecting ridgeline portion between the wall surface 6b of the insert mounting seat 6 and the inner peripheral surface of the main body chip discharge flute 5 is chamfered to form the chamfered portion 6f in which the wall surface 6b and the inner peripheral surface of the main body chip discharge flute 5 intersect with each other. In this manner, compared to when a sharp edge remains in the intersecting ridgeline portion, it is possible to prevent the intersecting ridgeline portion from being damaged or broken. The chamfered portion 6f does not come into contact with the insert main body 11, and most of the chamfered portion 6f is formed in a concave curved surface shape inclined in the direction of the axis O.

The shaft portion 15a and the hole portion 6c in the second embodiment will be described in detail with reference to Fig. 31. In the present embodiment, in the hole portion 6c open on the bottom surface 6a of the insert mounting seat 6 of the drill main body 1, a portion on the tip side is a large diameter portion 6c1 having a constant inner diameter, having a circular cross-sectional shape around the axis O, and having the long length in the direction of the axis O. A portion on the rear end side is a small diameter portion 6c2 having a constant inner diameter slightly smaller than that of the large diameter portion 6c1, having a circular cross-sectional shape around the axis O, and having the shorter length in the direction of the axis O than that of the large diameter portion. However, a portion where the large diameter portion 6c1 and the small diameter portion 6c2 open on the bottom surface of the main body chip discharge flute 5 facing the outer peripheral side of the drill main body 1 is cut out by the bottom surface.

On the other hand, as in the first embodiment, in the shaft portion 15a projecting from the seating surface 15 of the insert main body 11 of the cutting insert 10, the tip portion serves as a large diameter portion 15a1. The rear end portion is formed in a multi-stage columnar shape around the axis O which serves as a small diameter portion 15a2 having the diameter slightly smaller than that of the large diameter portion 15a1. The length of the large diameter portion 15a1 in the direction of the axis O is longer than that of the small diameter portion 15a2. However, in the shaft portion 15a, the portion where the insert chip discharge groove 13 is formed is also cut out along the bottom surface facing the outer peripheral side of the insert chip discharge groove 13.

In the present embodiment, the outer diameter of the large diameter portion 15a1 of the shaft portion 15a is set to have a size that can be fitted into the large diameter portion 6c1 of the hole portion 6c. In this manner, the insert main body 11 of the cutting insert 10 can be accurately and coaxially mounted around the axis O of the drill main body 1. Accordingly, high deflection accuracy of the cutting edge 14 can be secured. In order to secure the high deflection accuracy in this way, it is desirable that the shaft portion 15a falls within a range of h6 to h7, and it is desirable that the hole portion 6c falls within a range of H6 to H7 in the fitting class in JIS B 0401-1: 1998 (ISO 286-1: 1988).

The length of the whole shaft portion 15a in the direction of the axis O is slightly smaller than the length (depth) of the hole portion 6c in the direction of the axis O. The length of the large diameter portion 15a1 of the shaft portion 15a in the direction of the axis O is slightly smaller than the length (depth) of the large diameter portion 6c1 of the hole portion 6c in the direction of the axis O. When the shaft portion 15a is fitted into the hole portion 6c, no gap is formed between the bottom surface 6a of the insert mounting seat 6 of the drill main body 1 and the seating surface 15 of the insert main body 11 of the cutting insert 10. The configurations are common to those of the first embodiment except that the hole portion 6c has the constant inner diameter.

### INDUSTRIAL APPLICABILITY

According to the present invention, even in a case of wet cutting in which drilling is performed while a coolant is supplied, when chips become sludge together with the coolant, it is possible to prevent the sludge from entering a contact portion between a contact surface of a cutting insert and a wall surface of an insert mounting seat from a tip side of a drill main body. Therefore, it is possible to perform stable drilling over a long period of time by preventing the contact surface or the wall surface from being worn. Therefore, the present invention is industrially applicable.

### REFERENCE SIGNS LIST

- 1:: Drill main body
- 1a:: Coolant hole
- 5:: Main body chip discharge flute
- 6:: Insert mounting seat
- 6a:: Bottom surface of insert mounting seat 6
- 6b:: Wall surface of insert mounting seat 6
- 6c:: Hole portion
- 6c1:: Large diameter portion of hole portion 6c
- 6c2:: Small diameter portion of hole portion 6c
- 6d:: Screw hole
- 6e:: Recess portion
- 6f:: Chamfered portion
- 7:: Projection wall portion
- 7a:: Tip surface of projection wall portion 7
- 10:: Cutting insert
- 11:: Insert main body
- 11a:: Mounting hole
- 12:: Tip flank
- 13:: Insert chip discharge groove
- 14:: Cutting edge
- 15:: Seating surface
- 15a:: Shaft portion
- 15a1:: Large diameter portion of shaft portion 15a
- 15a2:: Small diameter portion of shaft portion 15a
- 16:: Contact surface
- 17:: Projection portion
- 17a:: Rear end surface of projection portion 17
- 17b:: Side surface of the projection portion 17 facing side opposite to drill rotation direction T
- 18:: Clamp screw
- O:: Axis of drill main body 1
- T:: drill rotation direction
- P:: Contact portion between wall surface 6b and contact surface 16
- Q:: Intersecting ridgeline between tip flank 12 and side surface 17b of projection portion 17

## Claims

1. An indexable drill comprising:
a drill main body configured to have an insert mounting seat formed in a tip portion and to be rotated around an axis; and
a cutting insert configured to be detachably mounted on the insert mounting seat,
wherein an outer periphery of the tip portion of the drill main body has a main body chip discharge flute open on a tip surface of the drill main body and extending toward a rear end side of the drill main body,
the cutting insert has an insert chip discharge groove open on a tip flank of the cutting insert and communicating with the main body chip discharge flute,
a cutting edge is formed in an intersecting ridgeline portion between a wall surface of the insert chip discharge groove facing a drill rotation direction and the tip flank,
the insert mounting seat has
a bottom surface facing a tip side of the drill main body,
a wall surface extending to the tip side of the drill main body with respect to the bottom surface and facing the drill rotation direction, and
a screw hole open on the bottom surface,
the cutting insert has
a seating surface seated on the bottom surface toward the rear end side of the drill main body,
a contact surface coming into contact with the wall surface in the drill rotation direction toward a side opposite to the drill rotation direction,
a projection portion projecting to the side opposite to the drill rotation direction with respect to the contact surface on a tip side of the contact surface, and
a mounting hole penetrating the seating surface from the tip flank, and
a clamp screw inserted into the mounting hole is screwed into the screw hole so that the cutting insert is mounted on the insert mounting seat.

2. The indexable drill according to Claim 1,
wherein the projection portion has a side surface adjacent to the tip flank toward the side opposite to the drill rotation direction.

3. The indexable drill according to Claim 1 or 2,
wherein one of the seating surface of the cutting insert and the bottom surface of the insert mounting seat has a shaft portion formed around the axis, and the other has a hole portion formed around the axis into which the shaft portion is fitted, and
the hole portion is open to the main body chip discharge flute or the insert chip discharge groove.

4. The indexable drill according to any one of Claims 1 to 3,
wherein on the wall surface and the contact surface, an outer peripheral side of the drill main body has a wider width in a direction of the axis than an inner peripheral side of the drill main body.

5. The indexable drill according to any one of Claims 1 to 4,
wherein in the insert mounting seat, a corner portion where the bottom surface and the wall surface intersect with each other has a recess portion recessed with respect to the bottom surface and the wall surface and formed from the main body chip discharge flute to an outer peripheral surface of the drill main body, and
an opening portion on the outer peripheral surface side of the drill main body has a cross-sectional area of the recess portion which is larger than an opening portion on the main body chip discharge flute side.

6. The indexable drill according to any one of Claims 1 to 5,
wherein an intersecting ridgeline portion between the wall surface and an inner peripheral surface of the main body chip discharge flute is chamfered.

7. A cutting insert detachably mounted on the insert mounting seat of the drill main body in the indexable drill according to any one of Claims 1 to 6, comprising:
an insert main body;
an insert chip discharge groove open on a tip flank of the insert main body and communicating with the main body chip discharge flute;
a cutting edge formed in an intersecting ridgeline portion between a wall surface of the insert chip discharge groove facing a drill rotation direction and the tip flank;
a seating surface seated on the bottom surface of the insert mounting seat toward a rear end side of the drill main body;
a contact surface coming into contact with the wall surface of the insert mounting seat in a drill rotation direction toward a side opposite to the drill rotation direction;
a projection portion projecting to the side opposite to the drill rotation direction with respect to the contact surface on a tip side of the contact surface; and
a mounting hole penetrating the seating surface from the tip flank.

8. A drill main body in the indexable drill according to any one of Claims 1 to 6,
wherein an insert mounting seat is formed in a tip portion of the drill main body,
an outer periphery of the tip portion of the drill main body has a main body chip discharge flute open on a tip surface of the drill main body and extending to a rear end side of the drill main body, and
the insert mounting seat has
a bottom surface facing a tip side,
a wall surface extending to the tip side with respect to the bottom surface and facing a drill rotation direction, and
a screw hole open on the bottom surface and into which the clamp screw is screwed.
